# EUROPÄISCHE PATENTSCHRIFT

(11) **EP 3 480 897 B1**
(45) Veröffentlichungstag und Bekanntmachung des Hinweises auf die Patenterteilung: **04.08.2021**
(21) Anmeldenummer: 18200307.9
(22) Anmeldetag: 15.10.2018
(51) Int. Cl.: H01R 13/00, B60L 53/14, B60L 53/10, B60L 58/26

(54) **LADESÄULE FÜR EIN ELEKTROFAHRZEUG UND EIN ENTSPECHENDES ELEKTROFAHRZEUG**
CHARGING STATION FOR AN ELECTRIC VEHICLE AND A CORRESPONDING ELECTRIC VEHICLE
STATION DE RECHARGE POUR VEHICULE ELECTRIQUE ET VEHICULE ELECTRIQUE

(30) Priorität: 07.11.2017 DE 102017219736
(43) Veröffentlichungstag der Anmeldung: 08.05.2019
(73) Patentinhaber: AUDI AG, 85045 Ingolstadt (DE)
(72) Erfinder: Färber, Ingo, 85051 Ingolstadt (DE)

(56) Entgegenhaltungen:
- US-A1- 2009 256 523
- US-A1- 2013 029 193
- US-A1- 2017 096 073

## Beschreibung

Die Erfindung betrifft eine Ladesäule für ein Elektrofahrzeug der im Oberbegriff des Patentanspruchs 1 angegebenen Art.

Aktuell werden Ladesäulen beziehungsweise Ladestationen üblicherweise ausschließlich zum Aufladen von Elektrofahrzeugen eingesetzt. Das Aufladen derartiger Elektrofahrzeuge dauert eine gewisse Zeit, während sich das betreffende Elektrofahrzeug nicht im Fahrbetrieb befindet. Während des Ladevorgangs sind Elektrofahrzeuge häufig diversen Umwelteinflüssen, u.a. auch einer jeweiligen Umgebungstemperatur ausgesetzt. Üblicherweise erwärmt sich eine aufzuladende Batterie während des Ladevorgangs, wobei sich auch noch weitere elektrische beziehungsweise elektronische Komponenten des Elektrofahrzeugs erwärmen können. Häufig werden im Fahrgastraum Fahrzeugsysteme wie Batterien und sonstige elektronische Systeme insbesondere während eines Ladevorgangs eines Elektrofahrzeugs an einer Ladesäule in thermisch nicht optimale Zustände versetzt.

Besonders schnelle Be- und Entladezeiten bei leistungsstarken Elektrofahrzeugen lassen sich üblicherweise zudem nur noch durch ein ausgeklügeltes Thermomanagement von Batterien und zugehöriger Leistungselektronik realisieren, wobei insbesondere Batteriezellen gekühlt werden.

Darüber hinaus weisen Elektrofahrzeuge auch eine starke Temperaturabhängigkeit auf. Bei niedrigen Temperaturen sinkt beispielsweise eine Reichweite eines Elektrofahrzeugs, wobei höhere Temperaturen insbesondere die Alterung von Batterien beschleunigt, wobei es bei höheren Temperaturen auch zur Schädigung von Batteriezellen kommen kann. Grundsätzlich wäre daher eine relativ homogene und günstige Temperaturverteilung bei Akkus beziehungsweise Batterien von Elektrofahrzeugen wünschenswert.

Um während eines Ladevorgangs eines Elektrofahrzeugs ein möglichst ideales Thermomanagement zu erzielen, muss oftmals ein Teil des zur Verfügung stehenden Ladestroms zur Temperierung der betreffenden Batterien eingesetzt werden, sodass dieser Teil des Ladestroms nicht mehr zum eigentliche Aufladen der Batterie verwendet werden kann. Mit anderen Worten wird ein Teil der Anschlussleistung der betreffenden Ladesäule verbraucht.

Allerdings ist eine jeweilige Anschlussleistung, welche Energieversorger über das Netz bereitstellen können, üblicherweise begrenzt. Wird also die zur Verfügung stehende Anschlussleistung zur Temperierung einer Batterie eines Elektrofahrzeugs verwendet, so wird dadurch automatisch die Ladeleistung beschränkt.

Grundsätzlich ist es schon bekannt, überschüssige Wärme bei Ladevorgängen von Elektrofahrzeugen abzuführen. So zeigen beispielsweise die DE 10 2016 004 851 A1 die JP 2013134033 A, die DE 10 2012 220 218 A1,die DE 11 2012 003 099 T5, die US 2009/0256523 A1 und die US 2017/0096073 A1 jeweilige Lösungen zum Abführen von Wärme von einer Batterie eines Elektrofahrzeugs während eines Ladevorgangs.

Darüber hinaus zeigt die DE 10 2011 003 436 A1 einen Container zum Aufnehmen einer im Boden versenkbaren Ladestation zum Aufladen eines Elektrofahrzeugs. Eine Seitenwand des Containers kann dabei als Wand- oder Fußbodenheizung für einen Raum eines Gebäudes dienen, in welchem angrenzende Container angeordnet werden können.

Es ist die Aufgabe der vorliegenden Erfindung, eine Lösung bereitzustellen, mittels welcher Elektrofahrzeuge besonders effizient temperiert und aufgeladen werden können.

Diese Aufgabe wird durch eine Ladesäule für ein Elektrofahrzeug mit den Merkmalen des unabhängigen Patentanspruchs gelöst. Vorteilhafte Ausgestaltungen mit zweckmäßigen und nicht-trivialen Weiterbildungen der Erfindung sind in den abhängigen Ansprüchen angegeben.

Die erfindungsgemäße Ladesäule für ein Elektrofahrzeug umfasst einen Ladestecker zum Aufladen des Elektrofahrzeugs sowie einen mit dem Elektrofahrzeug verbindbaren Medienstecker zum Abführen von Wärme aus einem fahrzeugseitigen Temperierungskreislauf des Elektrofahrzeugs unter Vermittlung eines mittels des Mediensteckers zu- und abführbaren Kühlmediums. Die erfindungsgemäße Ladesäule zeichnet sich dabei dadurch aus, dass dem Elektrofahrzeug mittels des Mediensteckers auch Wärme unter Vermittlung eines mittels des Mediensteckers zu- und abführbaren Heizmediums zuführbar ist. Der Ladestecker ist ganz allgemein als Schnittstelle zu verstehen, über welche dem Elektrofahrzeug elektrische Energie zugeführt werden kann. Der Medienstecker ist ganz allgemein als Schnittstelle zu verstehen, mittels welcher dem Elektrofahrzeug Medien zugeführt und auch wieder aus dem Elektrofahrzeug abgeführt werden können.

Die erfindungsgemäße Ladesäule erweitert also ein Thermomanagement eines Elektrofahrzeugs in Richtung Beheizung und Kühlung jeweiliger Fahrzeugsysteme, welche mit dem besagten Temperierungskreislauf des Elektrofahrzeugs thermisch gekoppelt sind. Vorzugsweise weist die Ladesäule wenigstens eine Schnittstelle zum Anschließen der Ladesäule an wenigstens einen Wärmeversorger sowie eine Schnittstelle zum Anschließen der Ladesäule an wenigstens einen Kälteversorger auf. So kann beispielsweise im Winter über externe Wärmeversorger zugeheizt werden, um beispielsweise eine Traktionsbatterie des Elektrofahrzeugs in einem optimalen Temperaturbereich zu halten oder in einen optimalen Temperaturbereich zu bringen. Genauso gut ist es natürlich auch möglich, über den Medienstecker das besagte Kühlmedium zuzuführen, um beispielsweise während eines Ladevorgangs einer Batterie des Elektrofahrzeugs überschüssige Wärme von der Batterie abzuführen.

Die elektrische Anschlussleistung der betreffenden Ladesäule kann entweder reduziert oder vollumfänglich zum Aufladen einer Batterie des Elektrofahrzeugs genutzt werden, da die Temperierung des Elektrofahrzeugs rein über die Zuführung und Abführung des Kühlmediums beziehungsweise des Heizmediums durch den Medienstecker erfolgt. Zudem kann mittels der Ladesäule ein besonders ausgeklügeltes Thermomanagement des Elektrofahrzeugs erfolgen, indem bedarfsgerecht das Elektrofahrzeug und dazugehörige Komponenten geheizt oder gekühlt werden.

Insbesondere kann durch das gezielte Heizen beziehungsweise Kühlen des Elektrofahrzeugs gegebenenfalls eine erforderliche Ladezeit reduziert werden. Infolgedessen kann auch eine Belegungszeit der Ladesäule reduziert werden.

Insbesondere liegt der Erfindung die Erkenntnis zugrunde, dass die Wärmebeziehungsweise Kälteerzeugung mit alternativen Technologien durchaus wirtschaftlicher als mit Strom ist und auch üblicherweise eine bessere Energiebilanz aufweist. Ein Beispiel hierfür ist die Kraft-Wärme-Kälte-Kopplung, üblicherweise mit KWKK abgekürzt. Hier wird die von einem Blockheizkraftwerk, einer thermischen Solaranlage oder einer Geothermieanlage erzeugte Wärme zum Betrieb einer Adsorptionskältemaschine für die Klimatisierung verwendet. Darüber hinaus gibt es mehrere Möglichkeiten der Kälteerzeugung, wie Kälteerzeugung mit thermischen Systemen und Kälteerzeugung mit thermomechanischen Systemen.

Erfindungsgemäß ist es außerdem vorgesehen, dass die Ladesäule dazu eingerichtet ist, in Abhängigkeit von einer Außentemperatur und einer Temperatur von zumindest einer mit dem Temperierungskreislauf thermisch gekoppelten Komponente des Elektrofahrzeugs Wärme aus dem Temperierungskreislauf abzuführen oder dem Temperierungskreislauf Wärme zuzuführen. Dafür kann die Ladesäule beispielsweise einen Steuerung aufweisen, welche mit unterschiedlichsten fahrzeugseitigen und fahrzeugexternen Sensoren gekoppelt ist. Die Steuerung der Ladesäule kann in Abhängigkeit von entsprechenden Sensordaten bezüglich der Außentemperatur und der Temperatur unterschiedlichster Komponenten des Elektrofahrzeugs bedarfsgerecht ein Heizmedium oder auch ein Kühlmedium zuführen beziehungsweise abführen, um unterschiedlichste Komponenten des Elektrofahrzeugs passgenau zu temperieren. Ohne Zutun eines Benutzers des Elektrofahrzeugs kann so das Elektrofahrzeug, insbesondere eine Batterie des Elektrofahrzeugs oder auch ein Fahrzeuginnenraum des Elektrofahrzeugs, vor, während und/oder nach einem Ladevorgang optimal temperiert werden.

Die Ladesäule verfügt erfindungsgemäß über die besagten Schnittstellen zum Anschließen der Ladesäule an einen Wärmeversorger und an einen Kälteversorger. Grundsätzlich kann die Ladesäule an verschiedensten Kältequellen oder Wärmequellen angeschlossen werden, sodass das besagte Kühlmedium beziehungsweise das besagte Heizmedium zum Temperieren des Elektrofahrzeugs diesem zu und von diesem wiederum abgeführt werden kann.

Beispielsweise ist es auch möglich, dass es sich bei der Ladesäule um eine private Ladesäule an einem privaten Stellplatz oder einer privaten Garage handelt. Durch Anschließen des Mediensteckers am Elektrofahrzeug kann beispielsweise im Winter das Elektrofahrzeug unabhängig von einer Stromzufuhr aufgewärmt werden, sodass beispielsweise ein Fahrzeuginnenraum des Elektrofahrzeugs und eine Batterie des Elektrofahrzeugs jeweils optimal temperiert werden kann, und zwar ohne Strom zu verbrauchen. Natürlich ist eine derartige Vorgehensweise auch bei kommerziellen Ladesäulen im öffentlichen Raum möglich.

Eine vorteilhafte Ausführungsform der Erfindung sieht vor, dass die Ladesäule dazu eingerichtet ist, unabhängig von einem Ladevorgang des Elektrofahrzeugs Wärme aus dem Temperierungskreislauf abzuführen oder dem Temperierungskreislauf Wärme zuzuführen. Das Aufladen einer Batterie des Elektrofahrzeugs kann also vollkommen entkoppelt von einer Temperierung des Elektrofahrzeugs erfolgen. Selbst wenn das Elektrofahrzeug mittels der Ladesäule gerade nicht aufgeladen wird, ist es möglich, über den in dem Elektrofahrzeug eingesteckten Medienstecker Wärme aus dem fahrzeugseitigen Temperierungskreislauf abzuführen oder Wärme dem Temperierungskreislauf des Elektrofahrzeugs zuzuführen. So ist es beispielsweise nach Abschluss eines Ladevorgangs möglich, einen Fahrzeuginnenraum des Elektrofahrzeugs - beispielsweise bei besonders niedrigen Umgebungstemperaturen - zu temperieren oder in einem bereits temperierten Zustand zu halten, und zwar ohne das Strom verbraucht wird. Weist die Ladesäule beispielsweise mehrere Ladestecker auf, so kann die gesamte Ladeleistung der Ladesäule zum Aufladen eines weiteren Elektrofahrzeugs verwendet werden, wobei das zuvor aufgeladene Elektrofahrzeug weiterhin temperiert wird.

Gemäß einer weiteren vorteilhaften Ausführungsform ist es vorgesehen, dass die Ladesäule eine Bezahlschnittelle zum Bezahlen der zugeführten und abgeführten Wärme aufweist. So können kommerzielle Betreiber der Ladesäule auf einfache Weise die zugeführte und die abgeführte Wärme auch abrechnen. Beispielsweise ist es möglich, an der Ladesäule direkt per Kreditkarte, per EC-Karte, via Paypal oder auch über beliebige andere Bezahlmethoden die zugeführte beziehungsweise abgeführte Wärme direkt abzurechnen und zu bezahlen.

Das nicht beanspruchte Elektrofahrzeug ist zum Anschließen an die erfindungsgemäße Ladesäule oder eine vorteilhafte Ausführungsform der erfindungsgemäßen Ladesäule ausgelegt, wobei das Elektrofahrzeug eine Ladeschnittstelle für den Ladestecker der Ladesäule, wenigstens einen Temperierungskreislauf und eine Medienschnittstelle für den Medienstecker der Ladesäule zum Abführen von Wärme aus dem Temperierungskreislauf des Elektrofahrzeugs sowie zum Zuführen von Wärme in den Temperierungskreislauf des Elektrofahrzeugs aufweist.

Es ist zudem vorgesehen, dass das Elektrofahrzeug einen Wärmetauscher zum Austauschen von Wärme zwischen dem fahrzeugseitigen Temperierungskreislauf und dem mittels des Mediensteckers zuführbaren sowie abführbaren Kühlmediums und Heizmediums aufweist. Dadurch kann auf besonders einfache Weise dem Temperierungskreislauf Wärme zugeführt oder von diesem abgeführt werden. Der Wärmetauscher ist als Rekuperator ausgebildet, besitzt also für ein Medium des Temperierungskreislaufs und für die mittels des Mediensteckers zuführbaren sowie abführbaren Kühlmedien beziehungsweise Heizmedien je einen getrennten Raum. Ein Fluid des Temperierungskreislaufs kommt so also niemals in Berührung mit den zuführbaren beziehungsweise abführbaren Kühlmedien oder Heizmedien. Dies ist insbesondere dann vorteilhaft, wenn der fahrzeugseitige Temperierungskreislauf ein von dem Kühlmedium und Heizmedium verschiedenes Fluid aufweist.

Schließlich sieht eine weitere vorteilhafte Ausführungsform des Elektrofahrzeugs vor, dass der Temperierungskreislauf einen Einlass zum Zuführen des Kühlmediums und Heizmediums sowie einen Auslass zum Abführen des Kühlmediums und Heizmediums aufweist. Insbesondere ist es in diesem Fall auch möglich, dass der besagte Wärmetauscher entfällt, sodass das betreffende Kühlmedium beziehungsweise Heizmedium direkt dem Temperierungskreislauf des Elektrofahrzeugs zugeführt und aus diesem wieder abgeführt werden kann. Dadurch ergibt sich eine besonders einfache Bauform zur Temperierung des Temperierungskreislaufs des Elektrofahrzeugs und somit zur Temperierung betreffender Komponenten des Elektrofahrzeugs.

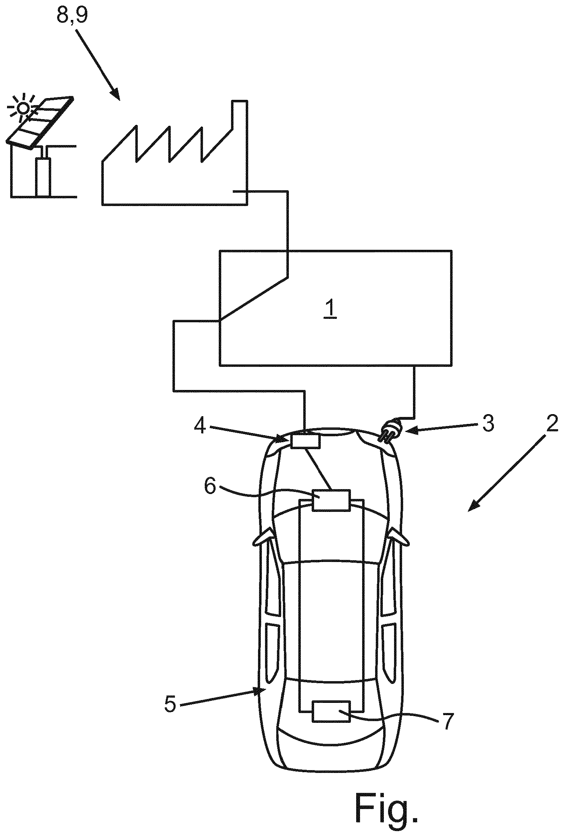

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur in einer stark schematisierten Darstellung ein an einer Ladesäule angeschlossenes Elektrofahrzeug, wobei zum einen ein Ladestecker zum Aufladen des Elektrofahrzeugs und zum anderen noch ein Medienstecker zum Temperieren des Elektrofahrzeugs angeschlossen sind.

In den Figuren sind funktionsgleiche Elemente jeweils mit denselben Bezugszeichen versehen.

Eine Ladesäule 1, an welcher ein Elektrofahrzeug 2 angeschlossen ist, ist in einer stark schematisierten Darstellung in der einzigen Figur gezeigt. Die Ladesäule 1 weist einen Ladestecker 3 zum Aufladen des Elektrofahrzeugs 2 auf. Des Weiteren weist die Ladesäule 1 noch einen Medienstecker 4 auf, über welchen das Elektrofahrzeug 2 temperiert werden kann. Mittels des Mediensteckers 4 kann zum einen Wärme aus einem fahrzeugseitigen Temperierungskreislauf 5 abgeführt und zum anderen auch Wärme dem Temperierungskreislauf 5 des Elektrofahrzeugs 2 zugeführt werden. Über den Medienstecker 4 ist es also möglich, dass Elektrofahrzeug 2 sowohl zu kühlen als auch zu heizen.

In den fahrzeugseitigen Temperierungskreislauf 5 ist ein Wärmetauscher 6 sowie wenigstens eine Komponente 7 integriert. Bei der Komponente 7 kann es sich beispielsweise um eine Batterie des Elektrofahrzeugs 2 handeln, welche thermisch mit dem Temperierungskreislauf 5 gekoppelt ist und durch Einstecken des Ladesteckers 3 aufgeladen werden kann. Entgegen der vorliegenden stark schematisierten Darstellung ist es natürlich auch möglich, dass auch eine Vielzahl anderer Komponenten mit dem Temperierungskreislauf 5 gekoppelt sind.

Die Ladesäule 1 weist vorzugsweise mehrere Schnittstellen zum Anschließen der Ladesäule 1 an unterschiedliche Wärmeversorger 8 und Kälteversorger 9 auf. So kann die Ladesäule 1 beispielsweise mit einer Kraft-Wärme-Kälte-Kopplung, kurz KWKK gekoppelt sein. Die Ladesäule 1 kann so auch mit einem Nah- oder Fernwärmenetz verbunden werden. Genauso kann die Ladesäule 1 auch mit einem Nah- Oder Fernkältenetz verbunden werden. Ebenso ist es möglich, dass die Ladesäule 1 mit einem Klimatisierungssystem von einem Ein- oder auch Mehrfamilienhaus gekoppelt wird. Auch kann die Ladesäule 1 an ein Klimatisierungssystem von öffentlichen Gebäuden angeschlossen werden.

Das Elektrofahrzeug 2 ist zum Anschließen an die Ladesäule 1 ausgelegt und umfasst insbesondere eine hier nicht näher dargestellte Ladeschnittstelle zum Aufnehmen des Ladesteckers 3 sowie eine ebenfalls nicht näher dargestellte Medienschnittstelle zum Aufnehmen des Mediensteckers 4. Entgegen der vorliegenden Darstellung ist es auch möglich, dass der Ladestecker 3 und der Medienstecker 4 in Form eines einzigen Steckers ausgebildet sind, in welchem jeweilige Medien- und Stromanschlüsse integriert sind. In dem Fall muss dann nur ein einziger Stecker in das Elektrofahrzeug 2 eingesteckt werden, sowohl um das Elektrofahrzeug 2 aufzuladen als auch um Wärme dem Elektrofahrzeug 2 zu entziehen oder diesem zuzuführen.

Die Ladesäule 1 ist insbesondere auch dazu eingerichtet, unabhängig von einem Ladevorgang des Elektrofahrzeugs 2 Wärme aus dem Temperierungskreislauf 5 abzuführen oder dem Temperierungskreislauf 5 Wärme zuzuführen. Beispielsweise ist es möglich, noch vor einem eigentlichen Aufladevorgang einer Batterie des Elektrofahrzeugs 2 durch zuführen von Wärme, also durch zuführen eines Heizmediums über den eingesteckten Medienstecker 4, die Batterie des Elektrofahrzeugs 2 auf eine besonders günstige Temperatur vorzuheizen, bei welcher die Batterie besonders schnell und ohne Beschädigung aufgeladen werden kann.

Während des eigentlichen Ladevorgangs der Batterie kann über den Medienstecker 4 beispielsweise dann ein Kühlmedium zugeführt werden, um überschüssige Abwärme von der Batterie abzuführen, sodass diese während des Ladevorgangs nicht überhitzt. Alternativ oder zusätzlich ist es auch möglich, insbesondere bei niedrigen Umgebungstemperaturen, die Abwärme während des Ladevorgangs zusätzlich auch zunächst noch soweit erforderlich und nötig zum Beheizen eines Innenraums des Elektrofahrzeugs 2 zu nutzen, wobei erst dann überschüssige Abwärme von der Batterie über die Ladesäule 1 zu einem entsprechenden Wärmeversorger beziehungsweise Kälteversorger 8, 9 abgeführt wird, wenn der Fahrzeuginnenraum ausreichend temperiert worden ist.

Nach Abschluss des Ladevorgangs ist es dann beispielsweise auch noch möglich, insbesondere bei niedrigen Außentemperaturen, weiterhin über den eingesteckten Medienstecker 4 ein geeignetes Heizmedium zuzuführen, um über den fahrzeugseitigen Temperierungskreislauf 5 beispielsweise den Fahrzeuginnenraum des Elektrofahrzeugs 2 warm zu halten ohne dass dabei Strom benötigt wird.

Natürlich ist es bei besonders hohen Außentemperaturen auch möglich, unabhängig von einem eigentlichen Ladevorgang den Fahrzeuginnenraum des Elektrofahrzeugs 2 durch Zufuhr eines Kühlmediums über den Medienstecker 4 zu temperieren beziehungsweise zu kühlen. Unabhängig davon, ob das Elektrofahrzeug 2 über den Medienstecker 4 gekühlt oder geheizt wird, wird durch die Temperierung über die betreffenden Fluide, also über entsprechende Kühlmedien beziehungsweise Heizmedien, sichergestellt, dass eine Ladeleistung der Ladesäule 1 aufgrund der Temperierung des Elektrofahrzeugs 2 nicht beeinträchtigt wird. Denn das Temperieren des Elektrofahrzeugs 2 erfolgt unabhängig von einer Stromzufuhr zum Elektrofahrzeug 2, sodass die gesamte zur Verfügung stehende Ladeleistung der Ladesäule 1 zum eigentlichen Aufladen einer Batterie des Elektrofahrzeugs 2 verwendet werden kann.

Die Ladesäule 1 kann zudem eine hier nicht näher dargestellte Bezahlschnittstelle zum Bezahlen der zugeführten und abgeführten Wärme aufweisen. Beispielsweise kann die Ladesäule 1 ein Kartenlesegerät für Kreditkarten oder auch für EC-Karten aufweisen. Ferner ist es beispielsweise auch möglich, über eine Nahfeld-Kommunikation mit einem Smartphone eine Bezahlung vorzunehmen. Grundsätzlich sind beliebige Bezahlmethoden über die Ladesäule 1 möglich, um die zugeführte und abgeführte Wärme auch in Rechnung stellen zu können.

Die besagten Schnittstellen zum Anschließen der Ladesäule 1 an jeweiligen Wärmeversorgern 8 und Kälteversorgern 9 sowie der Medienstecker 4 können auch als Nachrüstmodul ausgebildet sein, welches bei konventionellen Ladesäulen als Baugruppe beziehungsweise Bausatz nachgerüstet werden kann. Ferner ist es auch möglich, dass die besagten Schnittstellen und der Medienstecker 4 von vorneherein in entsprechende Ladesäulen 1 schon bei deren Herstellung integriert werden.

## Patentansprüche

1. Ladesäule (1) für ein Elektrofahrzeug (2), umfassend
- einen Ladestecker (4) zum Aufladen des Elektrofahrzeugs (2);
- einen mit dem Elektrofahrzeug (2) verbindbaren Medienstecker (3) zum Abführen von Wärme aus einem fahrzeugseitigen Temperierungskreislauf (5) des Elektrofahrzeugs (2) unter Vermittlung eines mittels des Mediensteckers (3) zu- und abführbaren Kühlmediums;
wobei dem Elektrofahrzeug (2) mittels des Mediensteckers (3) auch Wärme unter Vermittlung eines mittels des Mediensteckers (3) zu- und abführbaren Heizmediums zuführbar ist, die Ladesäule (1) eine Steuerung aufweist, welche mit unterschiedlichen fahrzeugseitigen und fahrzeugexternen Sensoren gekoppelt ist, und die Steuerung dazu ausgebildet ist, in Abhängigkeit entsprechender Sensordaten bezüglich einer Außentemperatur und einer Temperatur von zumindest einer mit dem Temperierungskreislauf (5) thermisch gekoppelten Komponente (7) des Elektrofahrzeugs (2) Wärme aus dem Temperierungskreislauf (5) abzuführen oder dem Temperierungskreislauf (5) Wärme zuzuführen; **dadurch gekennzeichnet, dass**
die Ladesäule (1) wenigstens eine Schnittstelle zum Anschließen der Ladesäule (1) an einen Wärmeversorger (8) und wenigstens eine Schnittstelle zum Anschließen der Ladesäule (1) an einen Kälteversorger (9) aufweist, wobei Abwärme während des Ladevorgangs zusätzlich auch zunächst noch soweit erforderlich und nötig zum Beheizen eines Innenraums des Elektrofahrzeugs (2) genutzt wird, wobei erst dann überschüssige Abwärme von der Batterie über die Ladesäule (1) zum entsprechenden Wärmeversorger beziehungsweise Kälteversorger (8, 9) abgeführt wird, wenn der Fahrzeuginnenraum ausreichend temperiert worden ist.

2. Ladesäule (1) nach dem vorhergehenden Anspruch,
**dadurch gekennzeichnet, dass**
die Ladesäule (1) dazu eingerichtet ist, unabhängig von einem Ladevorgang des Elektrofahrzeugs (2) Wärme aus dem Temperierungskreislauf (5) abzuführen oder dem Temperierungskreislauf (5) Wärme zuzuführen.

3. Ladesäule (1) nach einem der vorhergehenden Ansprüche,
**dadurch gekennzeichnet, dass**
die Ladesäule (1) eine Bezahlschnittelle zum Bezahlen der zugeführten und abgeführten Wärme aufweist.

## Claims

1. Charging station (1) for an electric vehicle (2), comprising:
- a charging plug (4) for charging the electric vehicle (2);
- a media plug (3) that is connectable to the electric vehicle (2) for removing heat from a vehicle-side temperature control circuit (5) of the electric vehicle (2) using a cooling medium that can be supplied and removed by means of the media plug (3);
wherein heat can also be supplied to the electric vehicle (2) by means of the media plug (3) using a heating medium that can be supplied and removed by means of the media plug (3), the charging station (1) has a control unit which is coupled to different vehicle-side sensors and sensors external to the vehicle, and the control unit is designed to remove heat from the temperature control circuit (5) or supply heat to the temperature control circuit (5) depending on corresponding sensor data with respect to an outside temperature and a temperature of at least one component (7) of the electric vehicle (2) which is thermally coupled to the temperature control circuit (5),
**characterised in that**
the charging station (1) has at least one interface for connecting the charging station (1) to a heat supplier (8) and at least one interface for connecting the charging station (1) to a cold supplier (9), wherein waste heat is additionally also used initially during the charging process to the extent necessary and required for heating an interior of the electric vehicle (2), wherein excess waste heat is only removed from the battery via the charging station (1) to the corresponding heat or cold supplier (8, 9) when the vehicle interior has been sufficiently temperature-controlled.

2. Charging station (1) according to the preceding claim,
**characterised in that**
the charging station (1) is configured to remove heat from the temperature control circuit (5) or supply heat to the temperature control circuit (5) independently of a charging process of the electric vehicle (2).

3. Charging station (1) according to any of the preceding claims,
**characterised in that**
the charging station (1) has a payment interface for payment of the heat that is supplied and removed.

## Revendications

1. Borne de recharge (1) pour véhicule électrique (2), comprenant
- une fiche de recharge (4) pour charger le véhicule électrique (2) ;
- une fiche à fluide (3), pouvant être reliée au véhicule électrique (2) et permettant d'évacuer de la chaleur issue d'un circuit de régulation de température (5), situé côté véhicule du véhicule électrique (2) par circulation d'un fluide de refroidissement pouvant être fourni et évacué au moyen de la fiche à fluide (3) ;
dans lequel de la chaleur peut également être fournie au véhicule électrique (2) au moyen de la fiche à fluide (3) par circulation d'un fluide de chauffage pouvant être acheminé et évacué au moyen de la fiche à fluide (3), la borne de recharge (1) présente un dispositif de commande couplé à différents capteurs situés côté véhicule et externes au véhicule, et le dispositif de commande est conçu pour évacuer de la chaleur issue du circuit de régulation de température (5) ou fournir de la chaleur au circuit de régulation de température (5) en fonction de données de capteur correspondantes relatives à une température extérieure et à une température d'au moins un composant (7), couplé thermiquement au circuit de régulation de température (5), du véhicule électrique (2) ;
**caractérisée en ce que**,
la borne de recharge (1) présente au moins une interface permettant de raccorder la borne de recharge (1) à une alimentation en chaleur (8) et au moins une interface permettant de raccorder la borne de recharge (1) à une alimentation en froid (9), dans lequel la chaleur perdue pendant l'opération de recharge est en outre utilisée initialement dans la mesure où cela est nécessaire pour chauffer un habitacle du véhicule électrique (2), dans lequel de la chaleur perdue excédentaire n'est évacuée de la batterie vers l'alimentation en chaleur ou l'alimentation en froid (8, 9) correspondante par l'intermédiaire de la borne de recharge (1) que lorsque l'habitacle du véhicule a été suffisamment régulé en température.

2. Borne de recharge (1) selon la revendication précédente,
**caractérisée en ce que**,
la borne de recharge (1) est conçue pour évacuer de la chaleur hors du circuit de régulation de température (5) ou pour fournir de la chaleur au circuit de régulation de température (5) indépendamment d'une opération de recharge du véhicule électrique (2).

3. Borne de recharge (1) selon l'une quelconque des revendications précédentes,
**caractérisée en ce que**,
la borne de recharge (1) présente une interface de paiement permettant de payer la chaleur fournie et évacuée.
